# EUROPEAN PATENT APPLICATION

(11) **EP 4 797 524 A1**
(43) Date of publication of application: **26.08.2026**
(21) Application number: 24880199.5
(22) Date of filing: 18.10.2024
(51) Int. Cl.: H02P 1/02, H02P 6/182, H02P 6/21, H02P 7/29

(54) **MOTOR DRIVING DEVICE, METHOD FOR CONTROLLING SAME, AND ELECTRONIC DEVICE CONFIGURED TO BE DRIVEN BY MOTOR**

(30) Priority: 18.10.2023 KR 20230139764
(71) Applicant: LX Semicon Co., Ltd., Daejeon 34027 (KR)
(72) Inventor: MIN, Chol, Daejeon 34027 (KR); CHOI, Jong Tae, Daejeon 34027 (KR); HA, Jae Hyun, Daejeon 34027 (KR)
(74) Representative: Ter Meer Steinmeister & Partner
(86) International application number: PCT/KR2024/015908
(87) International publication number: WO 2025/084862

(57) **Abstract**

The disclosure is applicable to a motor driving device, and relates to a device for driving, for example, a direct current motor (DC motor), a method for controlling the same, and an electronic device driven by a motor. The method for controlling the restart of a BLDC motor may comprise receiving a command to stop the motor, loading data in which a speed change of the motor over time is stored after a driving signal for driving the motor is stopped, reducing a speed of the motor to correspond to the speed change stored in the data, and applying the driving signal to the motor based on the command to restart the motor.

## Description

### [Technical Field]

The disclosure is applicable to a motor driving device, and relates to, for example, a device for driving a direct current motor (DC motor), a method for controlling same, and an electronic device driven by a motor.

### [Background Art]

Recently, a variety of electronic devices, including home appliances such as washing machines and refrigerators, employ brushless direct current (hereinafter, BLDC) motors, which do not utilize commutating brushes and thus exhibit high energy efficiency.

The BLDC motor performs electronic commutation to change the direction of current flowing in armature coils, and when a position of rotor coincides with the commutation timing, a continuous rotating magnetic field is formed to rotate the rotor.

Such BLDC motors are widely used in home appliances such as refrigerators, air purifiers, and air conditioners, as well as information processing devices. A separate sensing device is generally required to detect the rotation speed and rotor position

In a sensorless BLDC motor drive circuit, which does not use a separate sensing device such as a Hall sensor, the position of a permanent magnet of the rotor may be detected by detecting a back electromotive force generated in the coils of the motor.

After detecting the rotation speed and the rotor position, the BLDC motor may be normally controlled. That is, after detecting the rotational speed and the position of the rotor at the beginning, the motor may be driven using the proportional-integral control method using the information.

When such a BLDC motor is initially driven, the motor may not have stopped completely or the motor may be in a state of natural operation due to wind or disturbances.

In electronic device. equipped with BLDC motors, when the motor is being driven by driving the electronic device while the motor is in operation, if a general initial driving sequence is performed, a starting failure may be occurred or it may be determined that there is an error in the electronic device.

In the general BLDC motor control process, it may take some time for the motor to stop completely and to restart after a motor stop command. In other words, it is difficult for the process of stopping the motor and restarting it quickly with a certain sequence.

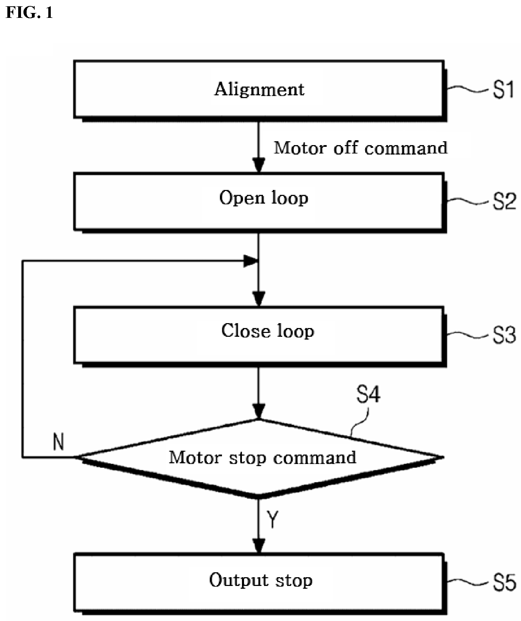

FIG. 1 is a flowchart showing a control process of a conventional BLDC motor.

In the process of controlling the BLDC motor, the alignment process is first carried out S1. The alignment process S1 may be performed primarily to determine a position of the rotor.

Subsequently, an open loop control process S2 may be performed.

The control method using the back electromotive force cannot obtain the position information of the rotor if the rotor is stationary or rotating at low speed. Therefore, it is possible to accelerate from the standstill to a constant speed (i.e., the speed at which the back electromotive force becomes large enough).

Next, a closed-loop control process S3 may be performed.

In this way, if the information of the rotor is known using the back electromotive force, the actual speed and position of the rotor may be determined, and so the feedback control of the motor may be achieved. After that, the motor may be controlled normally according to the user's command.

In this case, when the user stops driving the motor, a motor stop command is issued (S4). Accordingly, a driving signal (power) applied to the motor is interrupted (Output stop; S5), and no driving force is applied to the motor, causing the motor to gradually come to a stop.

As such, time may be required for the motor to completely stop after the driving signal applied to the motor is interrupted. If the user drives the motor again in a state in which the motor is operating without having completely stopped, the open loop control process (S2) may be performed again, and in this case, a startup failure may occur.

Therefore, a measure for solving such a problem is required.

### [Description of Invention]

### [Technical Problem]

Accordingly, time may be required for the motor to completely stop after the driving signal applied to the motor is interrupted. If the user drives the motor again in a state where the motor is operating without having completely stopped, the open loop control process (S2) may be performed again, and in this case, a startup failure may occur.

Therefore, a measure for solving such a problem is required.

### [Technical Solution]

According to an embodiment of the disclosure, there are provided a motor driving device, a control method thereof, and an electronic device driven by a motor, which allow a restart of the motor to be performed within a short time after a command to stop the motor.

In addition, there are provided a motor driving device, a control method thereof, and an electronic device driven by a motor, which allow an immediate restart to be performed when a motor restart command is generated before a rotor completely stops after the command to stop the motor.

In addition, there are provided a motor driving device, a control method thereof, and an electronic device driven by a motor, which allow control to be performed from a current speed of the motor to a commanded speed when a motor restart command is generated before the rotor completely stops after the command to stop the motor.

As a first aspect of the disclosure for achieving the above-described object, the disclosure, a method of controlling a restart of a motor may comprise: receiving a command to stop the motor; loading data in which a speed change of the motor over time is stored after a driving signal for driving the motor is stopped; reducing a speed of the motor to correspond to the speed change stored in the data; and applying the driving signal to the motor based on the command to restart the motor.

In an exemplary embodiment, the data may be a data in which a back electromotive force voltage signal received from the motor is stored.

In an exemplary embodiment, the reducing the speed of the motor may reduce a speed of the motor to correspond to the back electromotive force signal stored in the data.

In an exemplary embodiment, the data may contain a speed of the motor corresponding to the back electromotive force signal at an inflection point of an operating range of the motor.

In an exemplary embodiment, the reducing the speed of the motor may reduce the speed of the motor based on a speed calculated by linear interpolation of speed data over time within the operating range of the motor.

In an exemplary embodiment, the data may be stored as a lookup table.

As a second aspect of the disclosure for achieving the above-described object, a motor driving device may comprise: an inverter configured to transmit a driving signal to the motor; a sensor configured to sense at least one of a current and a voltage of the motor; and a control unit configured to control the inverter. The control unit, in response to a command to stop the motor, may load data in which a speed change of the motor over time is stored after a driving signal for driving the motor is stopped, reduce a speed of the motor to correspond to the speed change stored in the data, and apply the driving signal to the motor based on the command to restart the motor.

In an exemplary embodiment, the control unit may be configured to reduce the speed of the motor reduces a speed of the motor to correspond to the back electromotive force signal stored in the data.

In an exemplary embodiment, the control unit may be configured to reduce the speed of the motor reduces the speed of the motor based on a speed calculated by linear interpolation of speed data over time within the operating range of the motor.

In an exemplary embodiment, the data may be stored as a lookup table in a ROM connected to the control unit.

In an exemplary embodiment, the control unit may include: an estimation unit configured to estimate back electromotive force voltage from the motor; a calculation unit configured to calculate a speed and an angle of the motor based on the back electromotive force voltage estimated by the estimation unit;a PI controller configured to determine a target speed and a phase by checking an error of the back electromotive force voltage and determine a currently reflected speed to control the target speed; and a PWM signal generator configured to generate a PWM signal having a period and a magnitude based on the speed and the phase.

In an exemplary embodiment, the motor driving device may further comprise an AD converter configured to convert at least one of the current and the voltage sensed by the sensor.

As a third aspect of the disclosure for achieving the above-described object, an electronic device driven by a motor may comprise: the motor; an inverter for transmitting a driving signal to the motor; a sensor configured to sense at least one of a current and a voltage of the motor; and a control unit configured to control the inverter. The control unit, in response to a command to stop the motor, may load data in which a speed change of the motor over time is stored after a driving signal for driving the motor is stopped, reduce a speed of the motor to correspond to the speed change stored in the data, and apply the driving signal to the motor based on the command to restart the motor.

### [Brief Description of The Drawings]

FIG. 1 is a flowchart illustrating a control process of a convetional BLDC motor.
FIG. 2 is a block diagram illustrating a motor driving device according to an embodiment of the disclosure.
FIG. 3 is a block diagram illustrating a circuit configuration of the motor driving device according to an embodiment of the disclosure.
FIG. 4 is a detailed block diagram illustrating the motor driving device according to an embodiment of the disclosure.
FIG. 5 is a flowchart illustrating a data containing process of a motor control method according to an embodiment of the disclosure.
FIG. 6 illustrates an example of a table contained through the data containing process of the motor control method according to an embodiment of the disclosure.
FIG. 7 illustrates an example of a graph contained through the data containing process of the motor control method according to an embodiment of the disclosure.
FIG. 8 is a flowchart illustrating a motor driving process of the motor control method according to an embodiment of the disclosure.
FIG. 9 is a graph illustrating a phase voltage waveform of a motor after a driving signal for driving the motor is stopped.
FIG. 10 is an enlarged view of portion A of FIG. 9.

### [Best Mode for carrying out the Invention]

Hereinafter, exemplary embodiments disclosed in the present specification will be described in detail with reference to the accompanying drawings, in which the same reference numerals are assigned to the same or similar components regardless of the reference numerals, and a duplicate description thereof will be omitted. The suffixes "module" and "part" for components used in the following description are given or used interchangeably only in consideration of the ease of drafting the specification, and do not in themselves have meanings or roles that distinguish one from the other.

In addition, in describing the exemplary embodiments disclosed in the present specification, when it is determined that a detailed description of related known technologies may obscure the gist of the exemplary embodiments disclosed in the present specification, the detailed description thereof will be omitted.

In addition, it should be noted that the accompanying drawings are only for the purpose of facilitating understanding of the exemplary embodiments disclosed in the present specification and should not be construed as limiting the technical spirit disclosed in the present specification by the accompanying drawings.

Furthermore, although each drawing is described for convenience of explanation, implementing another embodiment by combining at least two drawings by those skilled in the art is also within the scope of rights of the disclosure.

In addition, when an element such as a layer, region, or substrate is referred to as being "on" another component, it will be understood that the element may be directly on the other element or that an intervening element may exist therebetween.

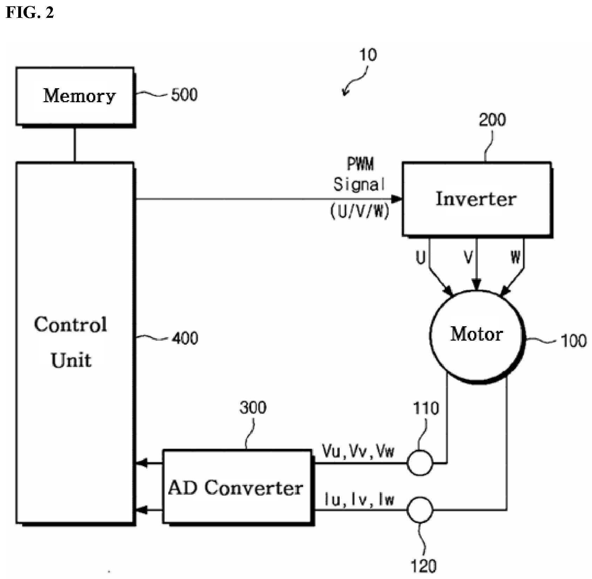

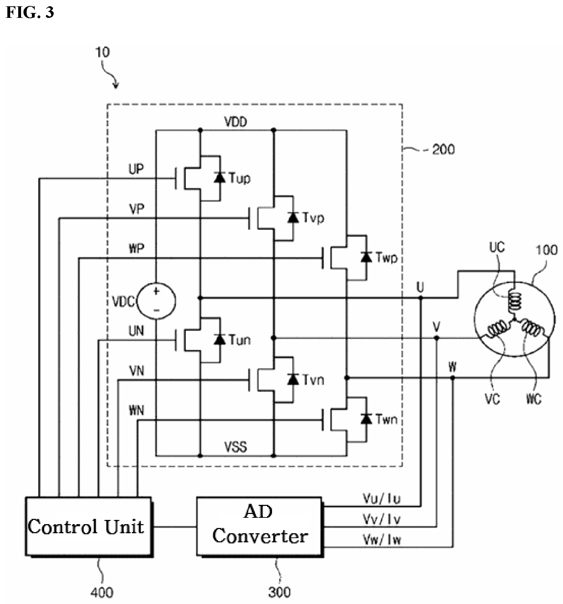

FIG. 2 is a block diagram illustrating a motor driving device according to an embodiment of the disclosure. FIG. 3 is a block diagram illustrating a circuit configuration of the motor driving device according to an embodiment of the disclosure.

Referring to FIG. 2, a motor driving device 10 according to an embodiment may include driving circuits 200, 300, 400, and 500 for driving a motor 100. As an example, such a motor driving device 10 may drive a sensorless brushless direct current (BLDC) motor 100. Hereinafter, the motor 100 will be described with reference to an example of a BLDC motor.

Such a motor driving device 10 may include an inverter 200 for transmitting a driving signal to the motor 100, a voltage sensor 110 configured to sense voltages Vu, Vv, and Vw output from the motor 100, a current sensor 120 configured to sense currents Iu, Iv, and Iw output from the motor 100, and a control unit 400 configured to control the inverter 200 to drive the motor 100.

Here, an example of sensing three-phase voltage and current to control the motor 100 is shown. In addition, the voltage sensor 110 and the current sensor 120 may be simply referred to as sensors 110 and 120. These sensors 110 and 120 may sense at least one of voltage and current output from the motor 100.

A memory 500 may be selectively connected to the control unit 400. The memory 500 may be provided outside the control unit 400. However, it should be understood that the memory 500 may be implemented inside a semiconductor chip such as a microcontroller unit (MCU) constituting the control unit 400. As an example, such a memory 500 may be implemented as an electrically erasable and programmable read only memory (EEPROM).

As an example, referring to FIG. 3, the motor 100 may include a stator including three-phase coils UC, VC, and WC having different phases, and a rotor using a permanent magnet. In FIG. 3, the memory 500 is omitted. Hereinafter, an example of the inverter 200 for driving the sensorless brushless direct current (BLDC) motor 100 will be briefly described.

The stator of the motor 100 may include a first coil UC having a U-phase (first phase), a second coil VC having a V-phase (second phase), and a third coil WC having a W-phase (third phase). The motor 100 may be driven based on voltages supplied from the inverter 200 to each of the three-phase coils UC, VC, and WC. In this case, magnetic forces generated in the first to third coils UC, VC, and WC may rotate the rotor of the motor 100.

The inverter 200 operates under the control of the control unit 400 to supply a first power voltage VDD or a second power voltage VSS to each of the three-phase coils UC, VC, and WC of the motor 100 through each of the first to third phases U, V, and W, or may float the corresponding coil without supplying the first and second power voltages VDD and VSS.

The inverter 200 receives the first power voltage VDD and the second power voltage VSS from a power supply VDC. The inverter 200 may receive first-first and first-second coil control signals UP and UN, second-first and second-second coil control signals VP and VN, and third-first and third-second coil control signals WP and WN from the control unit 400. The coil control signals UP, UN, VP, VN, WP, and WN supplied from the control unit 400 may be pulse width modulation (PWM) signals.

The inverter 200 may include a first pull-up transistor Tup and a first pull-down transistor Tun connected in series between a supply line of the first power voltage VDD and a supply line of the second power voltage VSS for driving the first coil UC of the motor 100.

In addition, the inverter 200 may include a second pull-up transistor Tvp and a second pull-down transistor Tvn connected in series between the supply line of the first power voltage VDD and the supply line of the second power voltage VSS for driving the second coil VC of the motor 100.

The inverter 200 may include a third pull-up transistor Twp and a third pull-down transistor Twn connected in series between the supply line of the first power voltage VDD and the supply line of the second power voltage VSS for driving the third coil WC of the motor 100.

The control unit 400 may sense voltage and current signals of the motor 100 through the sensors 110 and 120. In this case, the current and voltage signals Iu, Iv, Iw/Vu, Vv, and Vw sensed by the sensors 110 and 120 may be converted into digital signals through the AD converter 300 and input to the control unit 400.

When a user drives an electronic device equipped with the motor 100, for example, a home appliance, the control unit 400 may transmit a driving signal to the motor 100 through the inverter 200 in response to a duty set by a command from the user. That is, as an example, the motor driving device 10 including the motor 100 may be an electronic device. As an example, the motor driving device 10 may be a home appliance such as a refrigerator, an air purifier, an air conditioner, and the like, which is driven by the motor 100. As an example, such a motor driving device 10 may correspond to a device including the motor 100.

As an example, when the user sets a driving level (operating level) of the electronic device to operate the electronic device, the control unit 400 may generate a driving signal for the motor 100 to control the motor 100.

As an exemplary embodiment, the control unit 400 may first perform an alignment process for determining a position of a rotor during the process of controlling the motor 100.

Thereafter, an open loop control process may be performed by the control unit 400.

In a control method using back electromotive force, position information of the rotor is not available when the rotor is stationary or rotating at a low speed. Accordingly, the motor may be accelerated from a standstill to a certain speed (i.e., a speed at which the back electromotive force becomes sufficiently large).

Next, a closed loop control process may be performed by the control unit 400. When information on the rotor is obtained using the back electromotive force, feedback control of the motor 100 may be performed by determining an actual speed and a position of the rotor. Thereafter, the motor 100 may be normally controlled based on a user command.

In this case, when the user stops driving the motor 100, in response to a command to stop the motor 100, the control unit 400 may load data in which a change in speed of the motor 100 over time after a driving signal for driving the motor 100 is stopped is stored.

Accordingly, the control unit 400 may reduce the speed of the motor 100 to correspond to the speed change stored in such data. As an example, the control unit 400 may reduce the speed of the motor 100 after a driving signal for driving the motor 100 is stopped until the actual motor 100 completely stops. That is to say, even if a user stops driving the motor 100, the control unit 400 may control a deceleration process until the actual motor 100 completely stops, without stopping the driving signal for driving the motor 100.

In this case, if a control command is not received until the motor 100 completely stops, the control unit 400 may stop the driving signal for driving the motor 100.

However, if a restart command for the motor 100 is received before the motor 100 completely stops, the control unit 400 may apply a driving signal to the motor 100 based on such a restart command.

In this case, since the motor 100 is maintained in a state controlled by the control unit 400, when the restart command is received, it is possible to immediately respond to the driving command for the motor 100 without waiting until the motor 100 completely stops or going through processes such as an alignment, an open loop, and a closed loop, which are initial control processes.

As an example, when the user sets a driving level (operating level) of the electronic device to operate the electronic device, the control unit 400 may reduce the speed of the motor 100 to correspond to a back electromotive force signal stored in the data.

Data in which a change in speed of the motor 100 over time after such a driving signal for driving the motor 100 is stopped is stored may be contained in the memory 500 in advance. That is, the data may be contained in advance based on the motor 100.

In an exemplary embodiment, the data may contain a speed of the motor 100 corresponding to a back electromotive force signal at an inflection point of an operating range of the motor 100. That is, after the driving signal for driving the motor 100 is stopped, the back electromotive force signal may be received from the motor 100. An actual speed of the motor 100 may be calculated by such a back electromotive force signal. Accordingly, the data may contain the speed change of the motor 100 over such time.

Thus, the data may contain the speed of the motor 100 corresponding to the back electromotive force signal at the inflection point of the operating range of the motor 100 after the driving signal for driving the motor 100 is stopped. Such data may be stored in the memory 500 as a lookup table.

A back electromotive force (BEMF) signal is a voltage or electromotive force that pushes against the current that induces it. BEMF is a voltage drop in an alternating current (AC) circuit due to self-induction. Generally, for example, when driving a BLDC motor through two of the three coils of a three-phase BLDC motor, the BEMF signal may be received through an unused coil. In this case, the unused coil may be in a floating state.

When a stop command is received, the control unit 400 may reduce the speed of the motor 100 based on a speed calculated by linear interpolation of speed data over time within an operating range of the motor 100.

This process will be described later in detail with reference to the drawings.

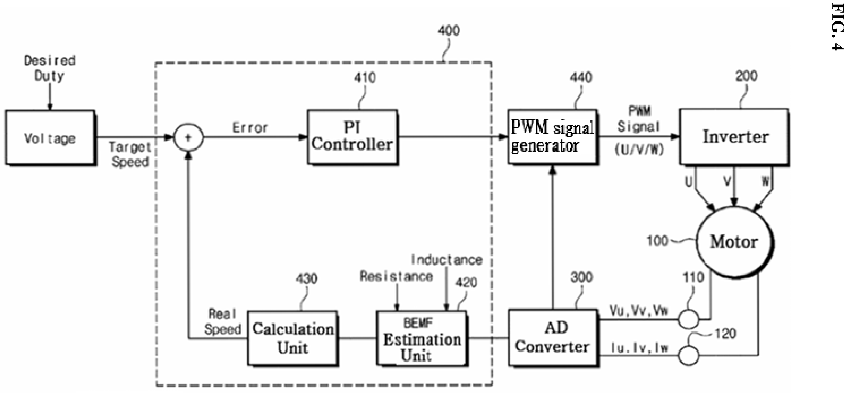

FIG. 4 is a detailed block diagram illustrating a motor driving device according to an embodiment of the disclosure.

Referring to FIG. 4, a detailed implementation example of the control unit 400 is shown. Here, the control unit 400 may use a proportional-integral control method.

In an exemplary embodiment, the control unit 400 may include an estimation unit 420 configured to estimate a back electromotive force (BEMF) voltage from the motor 100, a calculation unit 430 configured to calculate a speed and an angle of the motor 100 based on the BEMF voltage estimated by the estimation unit 420, and a PI controller 410 configured to determine a target speed and a phase by checking an error of the BEMF voltage and determining a currently reflected speed for controlling the motor to the target speed.

In addition, the control unit 400 may be configured to include a PWM signal generator 440 configured to generate a PWM signal having a period and a magnitude based on the speed and the phase.

Here, "Desired Duty" may correspond to a user command. When the user command is input, the PI controller 410 may read data contained in advance from the memory 500 and transmit it to the PWM signal generator 440.

Once data is initially recorded manually, subsequent processes may be automatically performed in the control unit 400. As an example, the user command is input to the PI controller 410, thereby allowing a target speed of the motor 100 to be determined in consideration of an error of the BEMF voltage.

The PWM signal generator 440 may generate a PWM signal having a period and a magnitude based on the speed and the phase determined as described above.

In this case, the PWM signal generator 440 may perform a linear interpolation calculation on the data extracted and recorded in advance in the memory 500. Accordingly, a PWM signal having a period and a magnitude based on the speed and the phase determined by such calculation may be generated.

The BEMF voltage may be converted into a digital signal by the AD converter 300 and applied to the estimation unit 420 or the PWM signal generator 440.

Through this process, based on a duty by the user command, a linear interpolation calculation of the data recorded in the memory 500 may be performed, and a PWM signal having a period and a magnitude based on the speed and the phase determined by such calculation may be applied to the inverter 200.

Accordingly, since the motor 100 may be controlled using the data extracted and contained in advance, the motor 100 may be controlled with a fast response characteristic.

Generally, once the motor is driven, operations of stopping or restarting the motor may subsequently be performed as needed.

However, in an electronic device to which the motor is applied, if a user wants to restart within a short time after a motor stop command for stopping driving, it may be determined as an error of the electronic device if a normal control process is performed again and a fast restart is not achieved.

In a general motor control process, time may be required for the motor to completely stop and then resume operation after a motor stop command. That is, it is difficult to rapidly perform a process in which the motor stops and is restarted again with a consistent sequence.

However, according to the embodiment of the disclosure described above, characteristic data of a speed at which the motor stops is extracted using the BEMF voltage, and the motor may be restarted using the extracted characteristic data. Accordingly, a restart of the motor may be implemented within a short time after a motor stop command without adding separate hardware.

In addition, a separate detection process is not required, and since characteristic data contained for the corresponding motor is utilized, an error may not occur in a speed detection process.

In addition, the motor may be controlled with a response characteristic having reproducibility.

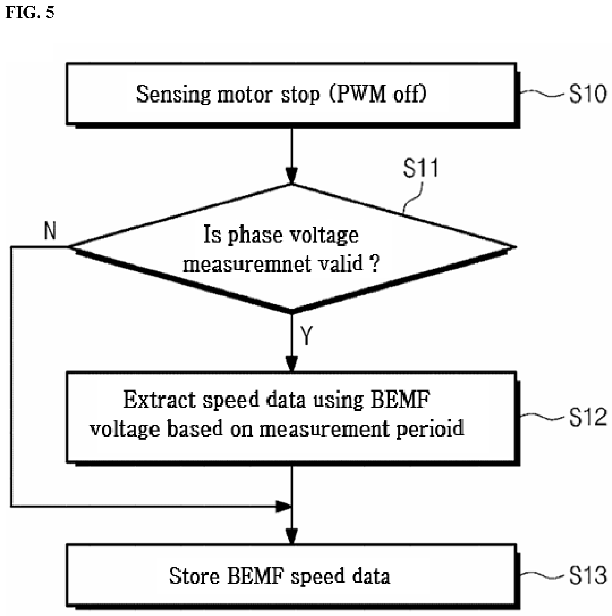

FIG. 5 is a flowchart illustrating a data containing process of a motor control method according to an embodiment of the disclosure.

Hereinafter, a process of containing data when a user stops driving the motor 100 in the device described in FIGS. 2 to 4 will be described.

As an exemplary embodiment, a data containing process performed in a state where the motor 100 is controlled by a general control process will be described.

As an example, in the process of controlling the motor 100, an alignment process for determining a position of a rotor, an open loop control process, and a closed loop control process are first performed, thereby performing feedback control of the motor 100, and accordingly, data may be contained when the user stops driving the motor 100 while the motor 100 is normally controlled based on a user command.

First, when an operation of the user stopping driving the motor 100 (Motor Stop) is sensed (S10), the sensors 110 and 120 may check whether a phase voltage measurement is valid (S11). As an example, the sensors 110 and 120 may check whether a back electromotive force voltage is received.

If the phase voltage measurement is valid, speed data of the motor 100 may be extracted by measuring the back electromotive force (BEMF) voltage (S12). As an example, a change in speed over time may be extracted based on a change in the BEMF voltage over time.

Accordingly, a change in speed over time may be stored as data using the change in the BEMF voltage (S13).

In such a process, the data may contain a speed of the motor 100 corresponding to a BEMF signal at an inflection point of an operating range of the motor 100 after a driving signal for driving the motor 100 is stopped. Such data may be stored in the memory 500 as a lookup table.

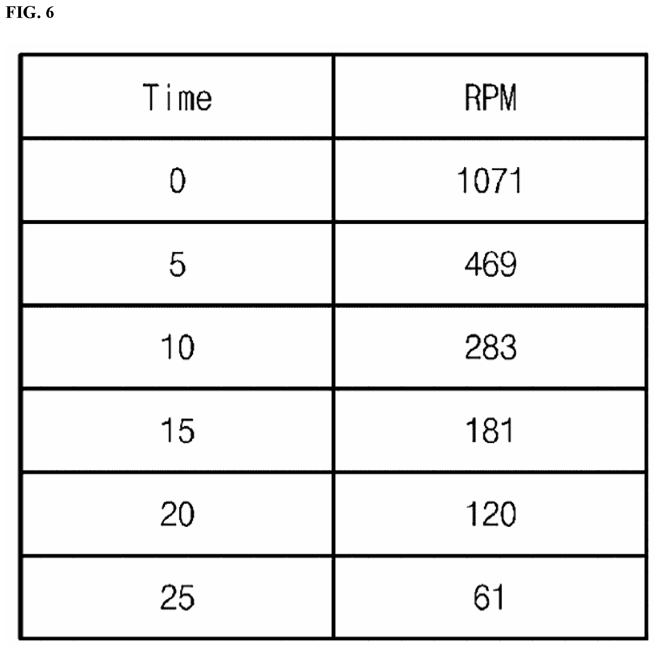

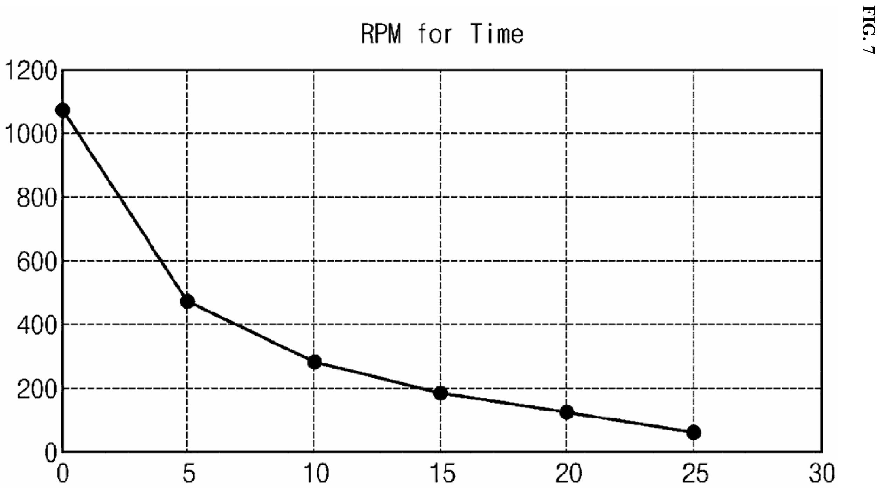

FIG. 6 illustrates an example of a table contained through a data containing process of a motor control method according to an embodiment of the disclosure. FIG. 7 illustrates an example of a graph contained through a data containing process of a motor control method according to an embodiment of the disclosure.

As described above, a duty and a speed corresponding to the duty may be stored in the form of a lookup table, as shown in FIG. 6.

In FIG. 6, as an example, speeds (RPM) of the motor 100 at times 0, 5, 10, 15, 20, and 25 (for example, in seconds) are displayed as a table.

Meanwhile, such a change in speed over time may be illustrated in the form of a graph having time (horizontal axis) and speed (RPM; vertical axis), as shown in FIG. 7.

FIG. 7 illustrates a graph in which the horizontal axis represents time and a vertical axis represents speed (RPM) in a substantially linear form.

As such, the time is contained in steps, such as 0, 5, 10, 15, 20, and 25 seconds, for example. Accordingly, speed values between such stepwise data may be obtained by a linear interpolation calculation of the data.

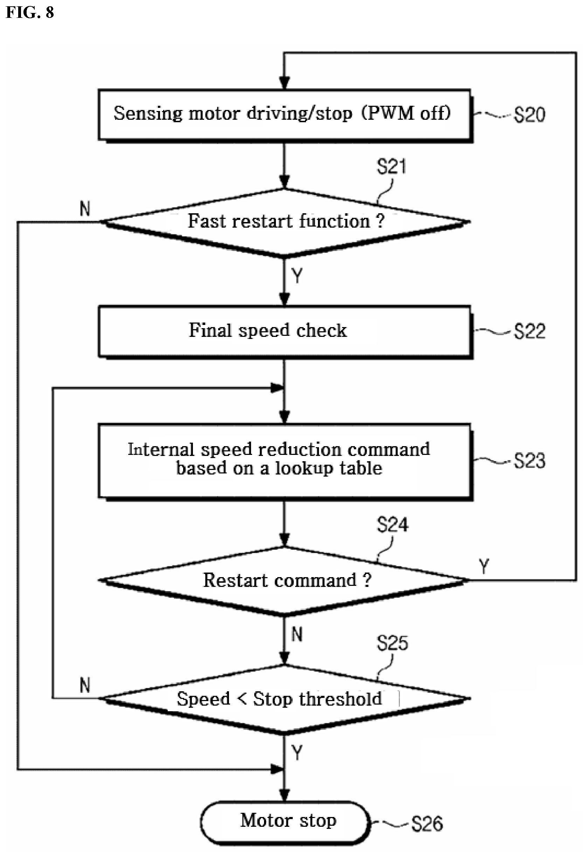

FIG. 8 is a flowchart illustrating a motor driving process of a motor control method according to an embodiment of the disclosure.

Hereinafter, with reference to FIG. 8, such a driving process of the motor 100 will be described step by step. Such a driving process may be performed in the control unit 400 described above.

As described above, in a state where the motor 100 is controlled by a general control process, it may be sensed whether a motor driving signal or a motor stop signal (PWM off) is received (S20).

Such a general control process may be, for example, a process in which an alignment process for determining a position of a rotor, an open loop control process, and a closed loop control process are performed, thereby performing feedback control of the motor 100, and accordingly, the motor 100 is normally controlled based on a user command.

When the motor driving signal is received, the motor 100 may be controlled accordingly. On the other hand, when the motor stop signal is received, a process of checking whether a control process according to the disclosure, that is, a fast restart function is set, may be performed (S21). As an example, such a fast restart function may be selectable by a user.

As such, when the fast restart function is set, data in which a change in speed of the motor 100 over time after a driving signal for driving the motor 100 is stopped is stored may be loaded (S22). A final speed of the motor may be checked using such data (Final speed check).

Thereafter, an internal speed reduction command may be internally issued based on a lookup table from a control block (S23). Specifically, speed reduction control of the motor 100 may be performed by matching a target speed of the motor 100 to, for example, speed data contained in the memory (EEPROM) 500. In this case, if a corresponding speed section is not an inflection section, a corresponding speed value may be calculated through linear interpolation.

As such, when the user stops driving the motor 100, in response to a command to stop the motor 100, data in which a change in speed of the motor 100 over time after the driving signal for driving the motor 100 is stopped is stored may be loaded.

Accordingly, the speed of the motor 100 may be reduced to correspond to the speed change stored in such data. As an example, after the driving signal for driving the motor 100 is stopped, the speed of the motor 100 may be reduced until the actual motor 100 completely stops. That is to say, even if the user stops driving the motor 100, the deceleration process may be controlled until the actual motor 100 completely stops, without stopping the driving signal for driving the motor 100.

In this case, if a control command is not received until the motor 100 completely stops, the driving signal for driving the motor 100 may be stopped after the motor 100 stops or when the motor 100 stops.

As such, it may be checked whether a restart command of the motor 100 is received before the motor 100 completely stops (S24).

In this case, if a current motor speed is less than or equal to a certain level (stop threshold), the motor 100 may be stopped. On the other hand, if the current motor speed is not less than or equal to the certain level (stop threshold), the motor 100 may be normally controlled from the current speed to a command speed upon restart.

As an example, a driving signal may be applied to the motor 100 based on the command speed upon restart in accordance with the motor restart command.

In this case, since the motor 100 is maintained in a normally controlled state, when the restart command is received, it is possible to immediately respond to the driving command for the motor 100.

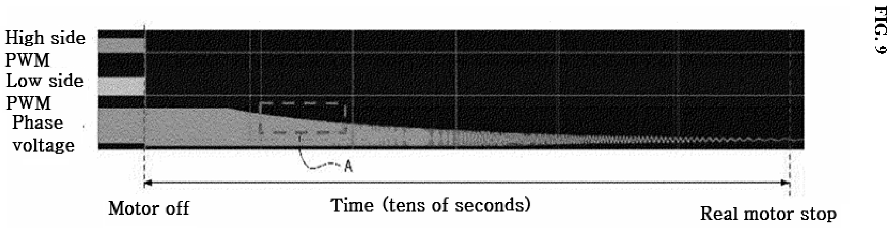

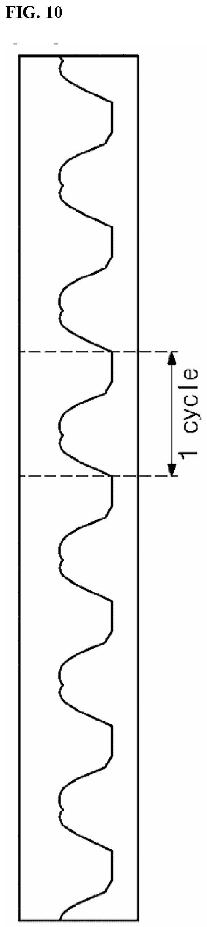

FIG. 9 is a graph illustrating a phase voltage waveform of the motor after a driving signal for driving the motor is stopped. FIG. 10 is an enlarged view of portion A of FIG. 9.

Referring to FIG. 9, it may be seen that the phase voltage is received for a certain time even after the driving signal for driving the motor 100 is stopped and the high-side PWM signal and the low-side PWM signal are interrupted.

That is, it may be seen that even if the driving of the motor 100 is stopped, the motor 100 completely stops after a certain time has elapsed (real motor stop). That is to say, the phase voltage is received before the motor 100 completely stops, which corresponds to the BEMF voltage.

In FIG. 10, the speed of the motor in the corresponding section may be calculated by calculating the time of one cycle. In this way, BEMF voltage values that change over time may be contained as data. As described above, when a driving stop command of the motor 100 is received, the motor 100 may be controlled by reducing the speed of the motor 100 based on such contained data.

Accordingly, if the current motor speed is less than or equal to a certain level (stop threshold), the motor 100 may be stopped. On the other hand, if the current motor speed is not less than or equal to the certain level, the motor 100 may be normally controlled from the current speed to a command speed upon restart.

The above description is merely illustrative of the technical idea of the disclosure, and those of ordinary skill in the art to which the disclosure pertains will be able to make various modifications and variations without departing from the essential characteristics of the disclosure.

Accordingly, the embodiments disclosed in the disclosure are not intended to limit the technical idea of the disclosure but to illustrate it, and the scope of the technical idea of the disclosure is not limited by these embodiments.

The scope of protection of the disclosure should be interpreted based on the following claims, and all technical ideas within an equivalent scope should be interpreted as falling within the scope of rights of the disclosure.

## Claims

1. A method of controlling a restart of a motor, comprising:
receiving a command to stop the motor;
loading data in which a speed change of the motor over time is stored after a driving signal for driving the motor is stopped;
reducing a speed of the motor to correspond to the speed change stored in the data; and
applying the driving signal to the motor based on the command to restart the motor.

2. The method of claim 1, wherein the data is a data in which a back electromotive force voltage signal received from the motor is stored.

3. The method of claim 2, wherein the reducing the speed of the motor reduces a speed of the motor to correspond to the back electromotive force signal stored in the data.

4. The method of claim 1, wherein the data contains a speed of the motor corresponding to the back electromotive force signal at an inflection point of an operating range of the motor.

5. The method of claim 4, wherein the reducing the speed of the motor reduces the speed of the motor based on a speed calculated by linear interpolation of speed data over time within the operating range of the motor.

6. The method of claim 1, wherein the data is stored as a lookup table.

7. A motor driving device, comprising:
an inverter configured to transmit a driving signal to the motor;
a sensor configured to sense at least one of a current and a voltage of the motor; and
a control unit configured to control the inverter,
wherein the control unit, in response to a command to stop the motor, loads data in which a speed change of the motor over time is stored after a driving signal for driving the motor is stopped, reduces a speed of the motor to correspond to the speed change stored in the data, and applies the driving signal to the motor based on the command to restart the motor.

8. The motor driving device of claim 7, wherein the data is a data in which a back electromotive force voltage signal received from the motor is stored.

9. The motor driving device of claim 8, wherein the control unit reduces the speed of the motor reduces a speed of the motor to correspond to the back electromotive force signal stored in the data.

10. The motor driving device of claim 7, wherein the data contains a speed of the motor corresponding to the back electromotive force signal at an inflection point of an operating range of the motor.

11. The motor driving device of claim 10, wherein the control unit reduces the speed of the motor reduces the speed of the motor based on a speed calculated by linear interpolation of speed data over time within the operating range of the motor.

12. The motor driving device of claim 7, wherein the data is stored as a lookup table in a ROM connected to the control unit.

13. The motor driving device of claim 7, wherein the control unit includes:
an estimation unit configured to estimate back electromotive force voltage from the motor;
a calculation unit configured to calculate a speed and an angle of the motor based on the back electromotive force voltage estimated by the estimation unit;
a PI controller configured to determine a target speed and a phase by checking an error of the back electromotive force voltage and determine a currently reflected speed to control the target speed; and
a PWM signal generator configured to generate a PWM signal having a period and a magnitude based on the speed and the phase.

14. The motor driving device of claim 13, further comprising an AD converter configured to convert at least one of the current and the voltage sensed by the sensor.

15. An electronic device driven by a motor, comprising:
the motor;
an inverter for transmitting a driving signal to the motor;
a sensor configured to sense at least one of a current and a voltage of the motor; and
a control unit configured to control the inverter,
wherein the control unit, in response to a command to stop the motor, loads data in which a speed change of the motor over time is stored after a driving signal for driving the motor is stopped, reduces a speed of the motor to correspond to the speed change stored in the data, and applies the driving signal to the motor based on the command to restart the motor.
